# EUROPEAN PATENT SPECIFICATION

(11) **EP 1 857 974 B1**
(45) Date of publication and mention of the grant of the patent: **24.09.2008**
(21) Application number: 06425337.0
(22) Date of filing: 19.05.2006
(51) Int. Cl.: G06T 5/00

(54) **Safety system vision sensor and relative operating method**
Bildsensor für Sicherheitssystem und dazugehöriges Betriebsverfahren
Détecteur à formation d'images pour système de sécurité et procédé d'opération correspondant

(43) Date of publication of application: 21.11.2007
(73) Proprietor: Datasensor S.p.A., 40050 Monte San Pietro (Bologna) (IT)
(72) Inventor: Musiani, Roberto, 40050 Monte San Pietro (IT); Di Stefano, Luigi, 40135 Bologna (IT)
(74) Representative: Jorio, Paolo

(56) References cited:
- EP-A2- 1 146 478
- WO-A-20/04114243
- US-A- 5 881 124
- US-A- 5 889 885
- VAN ERP M ET AL: "An overview and comparison of voting methods for pattern recognition" FRONTIERS IN HANDWRITING RECOGNITION, 2002. PROCEEDINGS. EIGHTH INTERNATIONAL WORKSHOP ON AUG. 6-8, 2002, PISCATAWAY, NJ, USA,IEEE, 6 August 2002 (2002-08-06), pages 195-200, XP010601655 ISBN: 0-7695-1692-0

## Description

The present invention relates to a safety system vision sensor and relative operating method.

More specifically, the present invention relates to a vision sensor for controlling a hazard area, in or at which a machine or production equipment is located, to indicate the presence of an object in or intrusion by a person into the hazard area; to which application the following description refers purely by way of example.

As is known, in many manufacturing industries, a need is felt to improve the safety of production areas containing equipment and/or machinery which is potentially dangerous when an object and/or person enters a hazard area typically located adjacent to the machinery or equipment.

For which purpose, safety systems have been devised to monitor the hazard area and generate an alarm signal to turn off and/or appropriately control the machine or part of the equipment when intrusion of the monitored hazard area is detected.

Some known safety systems as disclosed in WO 2004/114243 comprise a vision sensor, in turn comprising a LASER emitting module which projects a reference, i.e. active, pattern onto the surface of the hazard area; and a digital television camera which acquires the image of the monitored hazard area.

The vision sensor also comprises a processing unit, which processes the acquired image to determine the presence/absence of the pattern and accordingly determine intrusion of the hazard area and generate the alarm signal.

A major drawback of vision sensors of the above type, however, lies in the extent to which image processing is affected by the ambient light conditions in which the vision sensor operates. The image, in fact, is processed by the vision sensor on the basis of various comparisons of quantities characteristic of the acquired image, and various comparison parameters whose values are established on the basis of a single reference ambient light condition, normally the light condition at the time the sensor is calibrated.

Consequently, whenever any change occurs in ambient light with respect to the reference light condition, the sensor operates with comparison parameters unsuited to the new light condition, makes erroneous comparisons between these and the processed quantities, and so generates alarm signals even in the absence of persons or objects within the hazard area. These erroneous signals are obviously a serious drawback, by resulting in unwarranted shutdown of machinery or equipment, with all the consequences this entails in terms of production.

It is an object of the present invention to provide a vision sensor designed to eliminate the aforementioned drawbacks, i.e. which is particularly strong, and stable alongside variations in ambient light.

According to the present invention, there is provided a vision sensor operating method as claimed in Claim 1 and preferably in any one of the following Claims depending directly or indirectly on Claim 1.

According to the present invention, there is also provided a vision sensor as claimed in Claim 7 and preferably in any one of the following Claims depending directly or indirectly on Claim 7.

A non-limiting embodiment of the present invention will be described by way of example with reference to the accompanying drawings, in which:
Figure 1 shows, schematically, a vision sensor in accordance with the teachings of the present invention;
Figure 2 shows a block diagram of a processing unit of the Figure 1 vision sensor;
Figure 3 shows a flow chart of the operations performed in the operating method of the Figure 1 vision sensor;
Figure 4 shows an example of ambient light divided into ranges with assigned levels and predetermined discrimination thresholds;
Figure 5 shows an example of the projected reference pattern and eight patterns discriminated by parallel processing on the basis of eight predetermined discrimination thresholds.

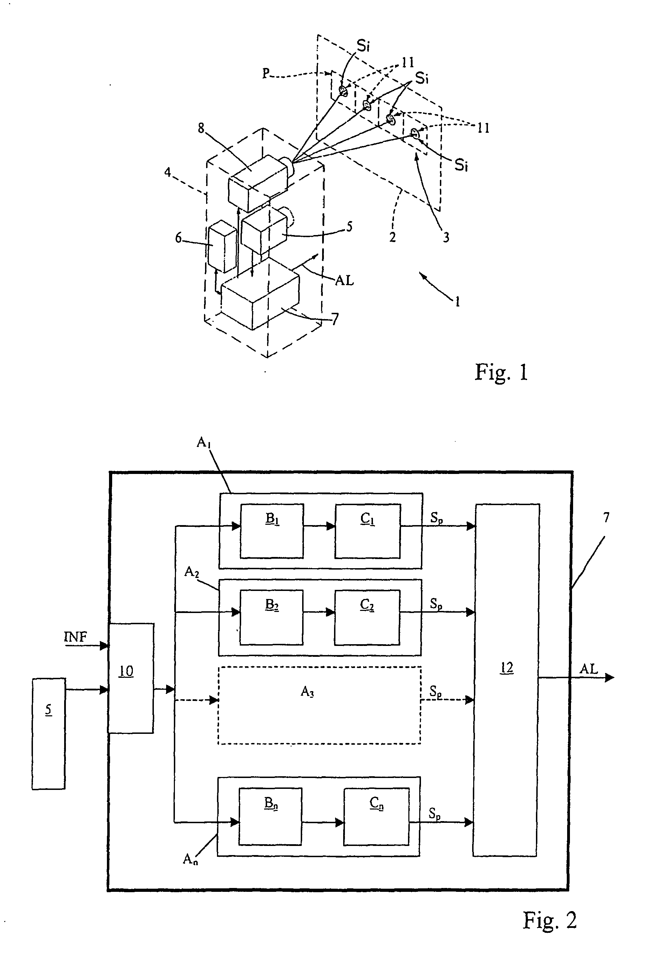

Number 1 in Figure 1 indicates as a whole a safety system comprising a hazard area 2 onto which a reference pattern 3 is present; and a vision sensor 4 for controlling hazard area 2 and generating an alarm signal AL when intrusion of hazard area 2 by an object and/or person is detected.

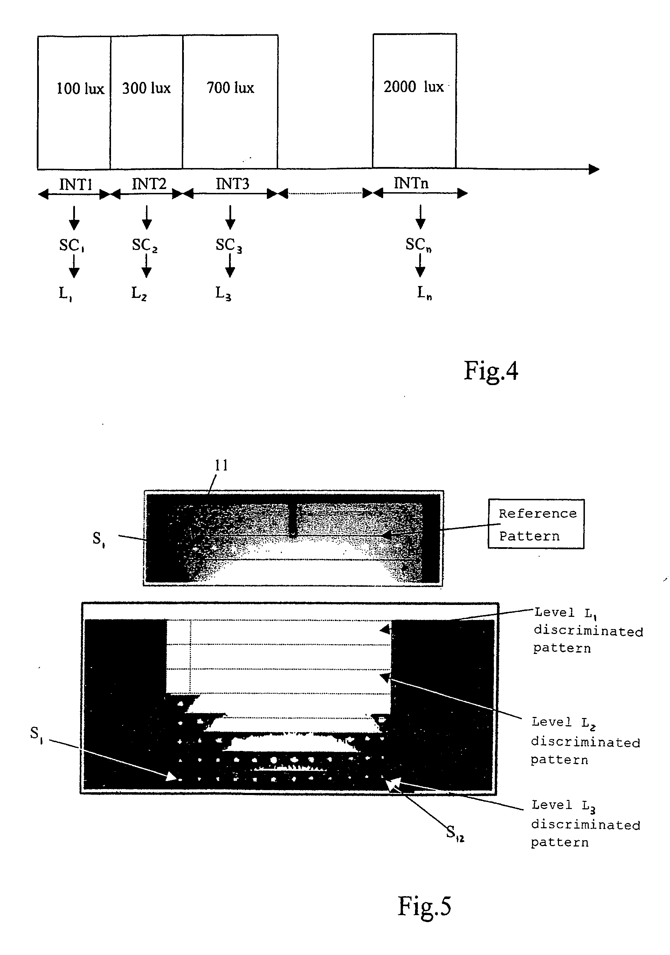

Vision sensor 4 substantially comprises: an image acquisition module 5, e.g. a still camera, a digital television camera, or any other similar type of equipment, for acquiring an image containing the reference pattern in an area portion P of hazard area 2; and a memory device 6 containing a number of discrimination thresholds SCᵢ (where i ranges between 1 and n) related to respective predetermined light ranges INTi (Figure 4).

Vision sensor 4 also comprises a processing unit 7 for performing a number of "parallel" processing operations (described in detail below) of a section of the acquired image containing the image of area portion P containing reference pattern 3.

In the Figure 1 example, the reference pattern is a light pattern, i.e. a so-called "active" pattern comprising a number of light sources or spots Si arranged on the surface of hazard area 2 in a predetermined graphic configuration which, in Figure 1, is a straight-line configuration.

It should be pointed out that the reference pattern may be of any geometric configuration, such as a cross, checkerboard, or similar.

It should also be pointed out that, in an alternative embodiment not shown, the reference pattern is passive, i.e. defined by one or more specially shaped labels fixed within area portion P of hazard area 2.

In the Figure 1 example, vision sensor 4 preferably, though not necessarily, also comprises an emission module 8, e.g. a LASER emitter, which generates one or more appropriately coherent, collimated light rays or beams onto area portion P, so as to project onto area portion P light spots Si of a given barycentre, shape, and size, according to the predetermined light pattern.

With reference to Figure 2, processing unit 7 controls emission module 8 and acquisition module 5 to synchronize acquisition of the image, and processes the image to determine a predetermined match between the spots Si in the image and the spots defining the reference pattern. If no match is found, an intrusion condition is determined, and processing unit 7 generates alarm signal AL, which commands partial or complete shutdown of a machine or production equipment, and/or a visual/acoustic danger signal.

More specifically, processing unit 7 substantially comprises a processing module 10, which receives the image acquired by acquisition module 5, and information INF relating to the barycentre, shape, and size of reference pattern spots Si.

As a function of reference pattern information INF, processing module 10 locates and extrapolates from the acquired image the image section sectors 11 onto which light spots Si are projected. It should be pointed out that the image section may contain only one image sector 11, i.e. may correspond to the image sector 11, in the event the pattern comprises only one spot Si.

Processing unit 7 also comprises a number of computing modules Aᵢ (where i ranges between 1 and n), each in turn comprising : a binarization module Bᵢ for discriminating the pattern in the image section as a function of a respective discrimination threshold SCᵢ; and a decision block Cᵢ, which determines a non-intrusion state when a predetermined match is found between the discriminated pattern and the reference pattern.

More specifically, each binarization block Bᵢ processes the image section sectors 11 of spots Si to discriminate, as a function of discrimination threshold SCᵢ, the pixels associated with the respective spot - hereinafter referred to as useful pixels - from the remaining pixels associated, for example, with the background of the image. In the example shown, binarization block Bᵢ discriminates the useful pixels in each image sector 11 by comparing the chromatic level numeric value of each pixel (grey level and/or colour level) with the discrimination threshold SCᵢ of the relative light level, and by assigning the pixel a first or second value, e.g. a zero or one, as a function of the outcome of the comparison.

More specifically, binarization block Bᵢ may determine a useful pixel when the chromatic level numeric value of the pixel satisfies a given relationship with the discrimination threshold SCᵢ, e.g. when the chromatic level value of the pixel exceeds discrimination threshold SCᵢ.

Each binarization block Bᵢ therefore generates an image of sectors 11 graphically and/or numerically representing the spots determined by discriminating the useful pixels from the remaining pixels (Figure 5) .

Each decision block Cᵢ receives the pattern, i.e. the spots, discriminated by relative binarization block Bᵢ, and determines a non-intrusion state if a predetermined match is found between the discriminated pattern and the reference pattern, and, conversely, determines an intrusion state if no predetermined match is found between the discriminated pattern and the reference pattern.

More specifically, in the Figure 2 example, decision block Cᵢ may determine, for each image sector 11, whether the number of useful pixels satisfies a given relationship with a predetermined numeric range Ip. If it does, the presence of a spot in image sector 11 is determined; if it does not, decision block Cᵢ determines the absence of a spot in sector 11.

If the presence of all the spots in the pattern is determined, i.e. if the discriminated pattern and reference pattern match, decision block Cᵢ determines a non-intrusion state and generates a signal Sp coding that state.

Conversely, if the absence of one or more spots in the reference pattern is determined, i.e. if no match is found, decision block Cᵢ determines an intrusion state and generates a signal Sp coding that state.

Processing unit 7 also comprises a generating block 12, which receives the signals Sp generated by decision blocks Cᵢ, and accordingly determines an intrusion condition to generate alarm signal AL. More specifically, generating module 12 determines a non-intrusion condition if at least one of decision blocks Cᵢ of computing modules Aᵢ determines a non-intrusion state, and, conversely, determines an intrusion condition if an intrusion state is determined by all the decision blocks Cᵢ of computing modules Aᵢ.

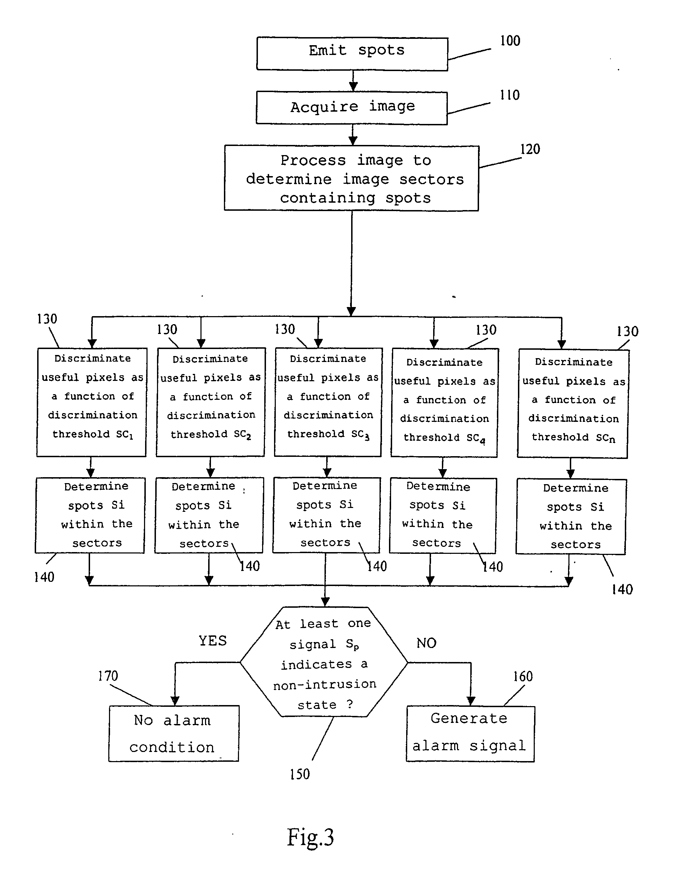

The operating method of vision sensor 4 will now be described with reference to Figure 3, and assuming processing unit 7 contains n=8 computing modules Aᵢ associated with n=8 respective discrimination thresholds SCᵢ related to corresponding ambient light ranges INTi (Figure 5).

Firstly, processing unit 7 drives emission module 8 to project the reference pattern, i.e. light spots Si (twelve in number in the Figure 5 example), onto area portion P of hazard area 2 (block 100), and at the same time commands acquisition of the image of hazard area 2 by module 5 (block 110).

Next, processing unit 7 receives the acquired image, from which it determines the image section sectors 11 (block 120) containing spots Si, and supplies them to computing modules Aᵢ.

At this point, binarization blocks Bᵢ of computing modules Aᵢ discriminate the spots in image sectors 11, i.e. the useful pixels, on the basis of respective discrimination thresholds SCᵢ related to the various light ranges INTi (block 130).

In the Figure 5 example, the pixels in sectors 11 are conveniently compared with n=8 different discrimination thresholds SCᵢ to give eight different spot pattern discrimination levels Lᵢ.

More specifically, Figure 5 shows a situation in which no object or person is located in hazard area 2, and the best discrimination threshold SCᵢ is the one associated with the eighth light level. In which case, spots Si in image sectors 11 are only discriminated correctly from the background by binarization module B₈ associated with discrimination threshold SC₈ related to the eighth light level L₈.

The other binarization modules B₁-B₇, in fact, compare the pixels with discrimination thresholds SCᵢ unsuited to the ambient light, by being associated with light levels Lᵢ lower than the one actually present. At the comparison stage, therefore, only the eighth binarization module B₈ provides for correctly discriminating all the spots Si in the pattern.

Once the spots Si are discriminated, i.e. the pixels are binary-coded, each decision block Cᵢ determines, for each image sector 11, the presence/absence of the spots, and accordingly determines an intrusion or non-intrusion state, and codes it into signal Sp (block 140).

At this point, generating module 12 receives signals Sp, and determines whether at least one of them indicates a non-intrusion state (block 150). If it does (YES output of block 150), generating module 12 determines a non-intrusion condition and does not generate alarm signal AL (block 170). Conversely, i.e. if signals Sp all indicate an intrusion state (NO output of block 150), generating module 12 determines an intrusion condition and generates alarm signal AL (block 160).

With reference to the Figure 5 example, decision blocks B₁-B₇ associated with discrimination thresholds SC₁-SC₇ generate signals Sp indicating an intrusion state, whereas the eighth decision block B₈ determines the presence of all the spots Si in respective sectors 11, i.e. determines a match between at least the discriminated pattern and the reference pattern, and so determines a non-intrusion state which disables generation of alarm signal AL.

In connection with the above, it should be pointed out that each discrimination threshold SCᵢ may be related to a given spot Sᵢ and a given light level.

In other words, as opposed to n thresholds SCᵢ, memory device 6 may contain n number of threshold vectors, each associated with a given light level Lᵢ and containing a number of discrimination thresholds, each associated with a given spot in the pattern. In this way, each spot may advantageously be discriminated more specifically as a function of the light level and of the position of the spot within the pattern.

The vision sensor as described above has the big advantage of being able to operate in any ambient light, of ensuring alarm signal AL is only generated in a real intrusion condition, and of advantageously disabling erroneous alarm signals. "Parallel" pixel discrimination as a function of different discrimination thresholds associated with different light ranges, in fact, ensures continuous recognition of the acquired image.

Clearly, changes may be made to system 1 as described and illustrated herein without, however, departing from the scope of the present invention as defined in the accompanying Claims.

## Claims

1. A method of operating a vision sensor (4) controlling a predetermined hazard area (2), to generate an alarm signal (AL) when an intrusion condition of said hazard area (2) is determined; said method comprising the steps of:
a) establishing a number of discrimination thresholds (SCᵢ) related to respective predetermined light intensity ranges (Lᵢ);
b) acquiring at least one image containing a reference pattern (3) in an area portion (P) of said hazard area (2) ;
c) performing a number of parallel processing operations of a section (11) of said image containing said area portion (P); each processing operation comprising the steps of:
c₁) discriminating the pattern contained in said image section (11) as a function of a respective one of said discrimination thresholds (SCᵢ), wherein each processing operation uses a different discrimination threshold (SCᵢ);
c₂) determining a non-intrusion state when a predetermined match is found between the discriminated pattern and the reference pattern (3);
said method also comprising the step of:
d) determining a non-intrusion condition when at least one of said parallel processing operations determines a non-intrusion state.

2. A method as claimed in Claim 1, wherein each of said parallel processing operations of the image section (11) performed in step c) comprises the step of:
c₃) determining an intrusion step when said predetermined match between the discriminated pattern and said reference pattern (3) is not found;
said step d) comprising the step of determining an intrusion condition when each said parallel processing operation determines an intrusion state.

3. A method as claimed in Claim 1 or 2, wherein said reference pattern (3) comprises at least one spot (Si) adapted to be contained in a predetermined sector (11) of said image section (11); said step c₁) comprising the step of comparing the pixels in the image sector (11) of said at least one spot (Si) with the corresponding discrimination threshold (SCᵢ) to discriminate the useful pixels associated with the spot (Si);
said step c₂) comprising the step of determining a non-intrusion state when the number of pixels associated with the discriminated said at least one spot (Si) satisfies a predetermined relationship with at least one predetermined limit threshold.

4. A method as claimed in Claim 3, wherein said step c₂) comprises the step of determining an intrusion state when the number of pixels associated with the discriminated said at least one spot fails to satisfy said predetermined relationship with said at least one predetermined limit threshold.

5. A method as claimed in any one of the foregoing Claims, and comprising the step of projecting said reference pattern (3) onto said hazard area (2).

6. A method as claimed in any one of the foregoing Claims, **characterized in that** said reference pattern (3) comprises a number of spots (Si); said step a) comprising the step of establishing a number of discrimination vectors, each of which is associated with a respective light range (Lᵢ) and contains a number of discrimination thresholds (SCᵢ), each related to a respective spot (Si) of a pattern.

7. A vision sensor (4) for monitoring a predetermined hazard area (2) to generate an alarm signal (AL) when an intrusion condition of said hazard area (2) is determined; said vision sensor (4) comprising:
- acquisition means (5) for acquiring an image containing a reference pattern (3) in an area portion (P) of said hazard area (2);
- memory means (6) for memorizing a number of discrimination thresholds (SCᵢ) related to respective predetermined light intensity ranges (Lᵢ);
- processing means (7) comprising a number of computing modules (Aᵢ), each comprising:
. first computing means (Bᵢ) for discriminating the pattern contained in an image section (11) as a function of a respective one of said discrimination thresholds (SCᵢ), wherein each computing module uses a different discrimination threshold (SCᵢ);
. second computing means (Cᵢ) which determine a non-intrusion state when a predetermined match is found between the discriminated pattern and the reference pattern;
said processing means (7) also comprising generating means (12) which determine a non-intrusion condition when at least one of said computing modules (Aᵢ) determines a non-intrusion state.

8. A vision sensor as claimed in Claim 7, wherein said second computing means (Cᵢ) determine an intrusion state when said predetermined match between the discriminated pattern and said reference pattern is not found; said generating means (12) determining an intrusion condition when each said second computing means (Cᵢ) of said computing modules (Aᵢ) determines an intrusion state.

9. A vision sensor as claimed in Claim 7 or 8, wherein the reference pattern comprises at least one spot (Si) in a sector (11) of the image section (11); said first computing means (Bᵢ) comparing the pixels in the image sector (11) of said at least one spot (Si) with the corresponding discrimination threshold (SCᵢ) to discriminate the useful pixels associated with said spot (Si) as a function of said comparison;
said second computing means (Cᵢ) determining a non-intrusion state when the number of pixels associated with the discriminated said at least one spot (Si) satisfies a predetermined relationship with at least one predetermined limit threshold.

10. A vision sensor as claimed in Claim 9, wherein said second computing means (Cᵢ) determine an intrusion state when the number of pixels associated with the discriminated said at least one spot fails to satisfy said predetermined relationship with at least said predetermined limit threshold (INTi).

11. A vision sensor as claimed in any one of Claims 7 to 10, and comprising emitting means (8) for projecting said reference pattern (3) onto said hazard area (2).

12. A vision sensor as claimed in any one of Claims 7 to 11, wherein the reference pattern (3) comprises a number of spots (Si); said memory means (6) comprising a number of discrimination vectors, each of which is associated with a respective light range (Lᵢ) and contains a number of discrimination thresholds (SCᵢ), each related to a respective spot (Si) of a pattern.

13. A processing unit, **characterized by** implementing a method as claimed in any one of Claims 1 to 6.

14. A software product loadable into the memory of a processing unit and designed to implement, when executed, the method as claimed in any one of Claims 1 to 6.

15. A safety system (1) comprising at least one hazard area (2) containing a reference pattern (3); and at least one vision sensor (4) as claimed in any one of Claims 7 to 12.

## Patentansprüche

1. Verfahren zum Betreiben eines Sichtsensors (4), der einen vorbestimmten Gefahrenbereich (2) überwacht, um ein Alarmsignal (AL) zu erzeugen, wenn eine Eindringbedingung des Gefahrenbereichs (2) bestimmt wird; wobei das Verfahren die Schritte umfasst:
a) Festlegen einer Anzahl von Unterscheidungsschwellen (SCᵢ), die sich auf jeweilige vorbestimmte Lichtintensitätsbereiche (Lᵢ) beziehen;
b) Erfassen mindestens eines Bildes, das ein Bezugsmuster (3) in einem Teilbereich (P) des Gefahrenbereichs (2) enthält;
c) Durchführen einer Anzahl von parallelen Verarbeitungsvorgängen eines Abschnitts (11) des Bildes, das den Teilbereich (P) enthält; wobei jeder Verarbeitungsvorgang die Schritte umfasst:
c₁) Unterscheiden des in dem Bildabschnitt (11) enthaltenen Musters als eine Funktion jeweils einer der Unterscheidungsschwellen (SCᵢ), wobei jeder Verarbeitungsvorgang eine verschiedene Unterscheidungsschwelle (SCᵢ) erzeugt;
c₂) Bestimmen eines Nicht-Eindringzustands, wenn eine vorbestimmte Übereinstimmung zwischen dem unterschiedenen Muster und dem Bezugsmuster (3) gefunden wird;
wobei das Verfahren ebenfalls den Schritt umfasst:
d) Bestimmen einer Nicht-Eindringbedingung, wenn mindestens einer der parallelen Verarbeitungsvorgänge einen Nicht-Eindringzustand bestimmt.

2. Verfahren gemäß Anspruch 1, bei dem jeder der bei Schritt c) durchgeführten parallelen Verarbeitungsvorgänge des Bildabschnitts (11) den Schritt umfasst:
c₃) Bestimmen eines Eindringschritts, wenn die vorbestimmte Übereinstimmung zwischen dem unterschiedenen Muster und dem Bezugsmuster (3) nicht gefunden wird;
wobei der Schritt d) den Schritt eines Bestimmens einer Eindringbedingung umfasst, wenn jeder der parallelen Verarbeitungsvorgänge einen Eindringzustand bestimmt.

3. Verfahren gemäß Anspruch 1 oder 2, bei dem das Bezugsmuster (3) mindestens einen Punkt (Si) umfasst, der angepasst ist, um in einem vorbestimmten Sektor (11) des Bildabschnitts (11) enthalten zu sein; wobei der Schritt c₁) den Schritt eines Vergleichens der Pixel in dem Bildsektor (11) des mindestens einen Punkts (Si) mit der entsprechenden Unterscheidungsschwelle (SCᵢ) umfasst, um die dem Punkt (Si) zugeordneten nützlichen Pixel zu unterscheiden;
wobei der Schritt c₂) den Schritt eines Bestimmen eines Nicht-Eindringzustands umfasst, wenn die Anzahl von Pixeln, die dem Unterschiedenen des mindestens einen Punkts (Si) zugeordnet sind, eine vorbestimmte Beziehung mit mindestens einer vorbestimmten Grenzschwelle erfüllt.

4. Verfahren gemäß Anspruch 3, bei dem der Schritt c₂) den Schritt eines Bestimmens eines Eindringzustands umfasst, wenn die Anzahl von Pixeln, die dem Unterschiedenen des mindestens einen Punkts zugeordnet sind, scheitert, die vorbestimmte Beziehung mit der mindestens einen vorbestimmten Grenzschwelle zu erfüllen.

5. Verfahren gemäß einem der vorhergehenden Ansprüche und mit dem Schritt des Projizierens des Bezugsmuster (3) auf den Gefahrenbereich (2).

6. Verfahren gemäß einem der vorhergehenden Ansprüche, **dadurch gekennzeichnet, dass** das Bezugsmuster (3) eine Anzahl von Punkten (Si) umfasst; wobei der Schritt a) den Schritt eines Festlegens einer Anzahl von Unterscheidungsvektoren umfasst, von denen jeder einem jeweiligen Lichtbereich (Lᵢ) zugeordnet ist und eine Anzahl von Unterscheidungsschwellen (SCᵢ) enthält, die sich jeweils auf einen jeweiligen Punkt (Si) eines Musters beziehen.

7. Sichtsensor (4) zum Überwachen eines vorbestimmten Gefahrenbereichs (2), um ein Alarmsignal (AL) zu erzeugen, wenn eine Eindringbedingung des Gefahrenbereichs (2) bestimmt wird; wobei der Sichtsensor (4) umfasst:
- Erfassungsmittel (5) zum Erfassen eines Bildes, das ein Bezugsmuster (3) in einem Teilbereich (P) des Gefahrenbereichs (2) enthält;
- Speichermittel (6) zum Speichern einer Anzahl von Unterscheidungsschwellen (SCᵢ), die sich auf jeweilige vorbestimmte Lichtintensitätsbereiche (Lᵢ) beziehen;
- Verarbeitungsmittel (7) mit einer Anzahl von Rechenmodule (Aᵢ), wobei jedes umfasst:
. erste Rechenmittel (Bᵢ) zum Unterscheiden des in einem Bildabschnitt (11) enthaltenen Musters als eine Funktion jeweils einer der Unterscheidungsschwellen (SCᵢ), wobei jedes Verarbeitungsmodul eine verschiedene Unterscheidungsschwelle (SCᵢ) verwendet;
. zweite Rechenmittel (Cᵢ), die einen Nicht-Eindringzustand bestimmen, wenn eine vorbestimmte Übereinstimmung zwischen dem unterschiedenen Muster und dem Bezugsmuster gefunden wird;
wobei die Verarbeitungsmittel (7) ebenfalls Erzeugungsmittel (12) umfassen, die eine Nicht-Eindringbedingung bestimmen, wenn mindestens einer der Rechenmodule (Aᵢ) einen Nicht-Eindringzustand bestimmt.

8. Sichtsensor gemäß Anspruch 7, bei dem die zweiten Rechenmittel (Cᵢ) einen Eindringzustand bestimmen, wenn die vorbestimmte Übereinstimmung zwischen dem unterschiedenen Muster und dem Bezugsmuster nicht gefunden wird; wobei die Erzeugungsmittel (12) eine Eindringbedingung bestimmen, wenn jedes der zweiten Rechenmittel (Cᵢ) der Rechenmodule (Aᵢ) einen Eindringzustand bestimmt.

9. Sichtsensor gemäß Anspruch 7 oder 8, bei dem das Bezugsmuster mindestens einen Punkt (Si) in einem Sektor (11) des Bildabschnitts (11) umfasst; wobei die ersten Rechenmittel (Bᵢ) die Pixel in dem Bildsektor (11) des mindestens einen Punkt (Si) mit der entsprechenden Unterscheidungsschwelle (SCᵢ) vergleichen, um die nützlichen Pixel, die dem Punkt (Si) zugeordnet sind, als eine Funktion des Vergleichs zu unterscheiden;
wobei die zweiten Rechenmittel (Cᵢ) einen Nicht-Eindringzustand bestimmen, wenn die Anzahl von Pixeln, die dem Unterschiedenen des mindestens einen Punkts (Si) zugeordnet sind, eine vorbestimmte Beziehung mit mindestens einer vorbestimmten Grenzschwelle erfüllt.

10. Sichtsensor gemäß Anspruch 9, bei dem die zweiten Rechenmittel (Cᵢ) einen Eindringzustand bestimmen, wenn die Anzahl von Pixeln, die dem Unterschiedenen des mindestens einen Punkts zugeordnet sind, scheitert, die vorbestimmte Beziehung mit mindestens der vorbestimmten Grenzschwelle (INTi) zu erfüllen.

11. Sichtsensor gemäß einem der Ansprüche 7 bis 10 und mit Emissionsmitteln (8) zum Projizieren des Bezugsmusters (3) auf den Gefahrenbereich (2).

12. Sichtsensor gemäß einem der Ansprüche 7 bis 11, bei dem das Bezugsmuster (3) eine Anzahl von Punkten (Si) umfasst; wobei die Speichermittel (6) eine Anzahl von Unterscheidungsvektoren umfassen, von denen jeder einem jeweiligen Lichtbereich (Lᵢ) zugeordnet ist, und eine Anzahl von Unterscheidungsschwellen (SCᵢ) enthält, die sich jeweils auf einen jeweilige Punkt (Si) eines Musters beziehen.

13. Verarbeitungseinheit, **gekennzeichnet durch** Implementieren eines Verfahren gemäß einem der Ansprüche 1 bis 6.

14. Softwareprodukt, das in den Speicher einer Verarbeitungseinheit geladen werden kann und ausgestaltet ist, um, wenn es ausgeführt wird, das Verfahren gemäß einem der Ansprüche 1 bis 6 zu implementieren.

15. Sicherheitssystem (1) mit mindestens einem Gefahrenbereich (2), der ein Bezugsmuster (3) enthält; und mindestens einem Sichtsensor (4) gemäß einem der Ansprüche 7 bis 12.

## Revendications

1. Procédé de fonctionnement d'un capteur d'images (4) commandant une zone à risque prédéterminée (2) pour générer un signal d'alarme (AL) lorsqu'une situation d'intrusion de ladite zone à risque (2) est déterminée ; ledit procédé comprenant les étapes suivantes :
a) l'établissement d'un certain nombre de seuils de discrimination (SCᵢ) se rapportant à des plages d'intensité de lumière prédéterminées respectives (Lᵢ) ;
b) l'acquisition d'au moins une image contenant un motif de référence (3) dans une portion de zone (P) de ladite zone à risque (2) ;
c) la réalisation d'un certain nombre d'opérations de traitement parallèles d'une section (11) de ladite image contenant ladite portion de zone (P) ; chaque opération de traitement comprenant les étapes suivantes :
c₁) la discrimination du motif contenu dans ladite section d'image (11) en fonction d'un seuil respectif desdits seuils de discrimination (SCᵢ), chaque opération de traitement utilisant un seuil de discrimination différent (SCᵢ) ;
c₂) la détermination d'un état de non intrusion lorsqu'une concordance prédéterminée est trouvée entre le motif prédéterminé et le motif de référence (3) ;
ledit procédé comprenant également l'étape suivante :
d) la détermination d'une situation de non intrusion lorsqu'au moins une desdites opérations de traitement parallèles détermine un état de non intrusion.

2. Procédé selon la revendication 1, dans lequel chacune desdites opérations de traitement parallèles de la section d'image (11) effectuées à l'étape c) comprend l'étape suivante :
c₃) la détermination d'une étape d'intrusion lorsque ladite concordance prédéterminée entre le motif discriminé et ledit motif de référence (3) n'est pas trouvée ;
ladite étape d) comprenant l'étape de détermination d'une situation d'intrusion lorsque chacune des opérations de traitement parallèles détermine un état d'intrusion.

3. Procédé selon la revendication 1 ou 2, dans lequel ledit motif de référence (3) comprend au moins un point (Si) adapté pour être contenu dans un secteur prédéterminé (11) de ladite section d'image (11) ; ladite étape c₁) comprenant l'étape de comparaison des pixels du secteur d'image (11) dudit au moins un point (Si) avec le seuil de discrimination correspondant (SCᵢ) pour discriminer les pixels utiles associés au point (Si) ;
ladite étape c₂) comprenant l'étape de détermination d'un état de non intrusion lorsque le nombre de pixels associés audit au moins un point (Si) discriminé répond à une relation prédéterminée avec au moins un seuil limite prédéterminé.

4. Procédé selon la revendication 3, dans lequel ladite étape c₂) comprend l'étape de détermination d'un état d'intrusion lorsque le nombre de pixels associés audit au moins un point discriminé ne répond pas à ladite relation prédéterminée avec ledit au moins un seuil limite prédéterminé.

5. Procédé selon l'une quelconque des revendications précédentes, comprenant l'étape de projection dudit motif de référence (3) sur ladite zone à risque (2).

6. Procédé selon l'une quelconque des revendications précédentes, **caractérisé en ce que** ledit motif de référence (3) comprend un certain nombre de points (Si) ; ladite étape a) comprenant l'étape d'établissement d'un certain nombre de vecteurs de discrimination, dont chacun est associé à une plage de lumière respective (Lᵢ) et contient un certain nombre de seuils de discrimination (SCᵢ), chacun se rapportant à un point respectif (Si) d'un motif.

7. Capteur d'images (4) pour surveiller une zone à risque prédéterminée (2) afin de générer un signal d'alarme (AL) lorsqu'une situation d'intrusion de ladite zone à risque (2) est déterminée ; ledit capteur d'images (4) comprenant :
- des moyens d'acquisition (5) pour acquérir une image contenant un motif de référence (3) dans une portion de zone (P) de ladite zone à risque (2) ;
- des moyens de mémoire (6) pour mémoriser un certain nombre de seuils de discrimination (SCᵢ) concernant des plages d'intensité de lumière prédéterminées respectives _{(L}i) ;
- des moyens de traitement (7) comprenant un certain nombre de modules de calcul (Aᵢ), comprenant chacun :
· des premiers moyens de calcul (Bᵢ) pour discriminer le motif contenu dans une section d'image (11) en fonction de l'un, respectif, desdits seuils de discrimination (SCᵢ), chaque module de calcul utilisant un seuil de discrimination différent (SCᵢ) ;
· des seconds moyens de calcul (Cᵢ) qui déterminent un état de non intrusion lorsqu'une concordance prédéterminée est trouvée entre le motif discriminé et le motif de référence ;
lesdits moyens de traitement (7) comprenant également des moyens de génération (12) qui déterminent une situation de non intrusion lorsqu'au moins l'un desdits modules de calcul (Aᵢ) détermine un état de non intrusion.

8. Capteur d'images selon la revendication 7, dans lequel lesdits seconds moyens de calcul (Cᵢ) déterminent un état d'intrusion lorsque ladite concordance prédéterminée entre le motif prédéterminé et ledit motif de référence n'est pas trouvée ; lesdits moyens de génération (12) déterminant une situation d'intrusion lorsque chacun desdits seconds moyens de calcul (Cᵢ) desdits modules de calcul (Aᵢ) détermine un état d'intrusion.

9. Capteur d'images selon la revendication 7 ou 8, dans lequel le motif de référence comprend au moins un point (Si) dans un secteur (11) de la section d'image (11) ; lesdits premiers moyens de calcul (Bᵢ) comparant les pixels du secteur d'image (11) dudit au moins un point (Si) avec le seuil de discrimination correspondant (SCᵢ) pour discriminer les pixels utiles associés audit point (Si) en fonction de ladite comparaison ;
lesdits seconds moyens de calcul (Cᵢ) déterminant un état de non intrusion lorsque le nombre de pixels associés audit au moins un point (Si) discriminé répond à une relation prédéterminée avec au moins un seuil limite prédéterminé.

10. Capteur d'images selon la revendication 9, dans lequel lesdits seconds moyens de calcul (Cᵢ) déterminent un état d'intrusion lorsque le nombre de pixels associés audit au moins un point discriminé répond à ladite relation prédéterminée avec au moins ledit seuil limite prédéterminé (INTi).

11. Capteur d'images selon l'une quelconque des revendications 7 à 10, comprenant des moyens d'émission (8) pour projeter ledit motif de référence (3) sur ladite zone à risque (2).

12. Capteur d'images selon l'une quelconque des revendications 7 à 11, dans lequel le motif de référence (3) comprend un certain nombre de points (Si) ; lesdits moyens de mémoire (6) comprenant un certain nombre de vecteurs de discrimination, dont chacun est associé à une plage de lumière respective (Lᵢ) et contient un certain nombre de seuils de discrimination (SCᵢ), chacun correspondant à un point respectif (Si) d'un motif.

13. Unité de traitement, **caractérisée par** la mise en oeuvre d'un procédé selon l'une quelconque des revendications 1 à 6.

14. Produit logiciel qui peut être chargé dans la mémoire d'une unité de traitement et est conçu pour mettre en oeuvre, lorsqu'il est exécuté, le procédé selon l'une quelconque des revendications 1 à 6.

15. Système de sécurité (1) comprenant au moins une zone à risque (2) contenant un motif de référence (3) ; et au moins un capteur d'images (4) selon l'une quelconque des revendications 7 à 12.
